# EUROPÄISCHE PATENTSCHRIFT

(11) **EP 3 029 362 B1**
(45) Veröffentlichungstag und Bekanntmachung des Hinweises auf die Patenterteilung: **01.11.2017**
(21) Anmeldenummer: 15197402.9
(22) Anmeldetag: 01.12.2015
(51) Int. Cl.: F16K 31/50, F16K 37/00, F16K 1/52, F16K 11/04, F24D 19/10, G01F 15/00, G05D 7/01

(54) **VERTEILERVENTIL MIT INTEGRIERTER DURCHFLUSSMESSEINRICHTUNG**
DISTRIBUTION VALVE COMPRISING INTEGRATED FLOW MEASURING DEVICE
VANNE DE REPARTITION COMPRENANT UN DISPOSITIF DE MESURE DE DEBIT INTEGRE

(30) Priorität: 01.12.2014 DE 102014117629
(43) Veröffentlichungstag der Anmeldung: 08.06.2016
(73) Patentinhaber: STRAUB KG, 73337 Bad Überkingen (DE)
(72) Erfinder: Langbein, Peter, 53708 Menden (DE)
(74) Vertreter: Fürst, Siegfried

(56) Entgegenhaltungen:
- EP-A2- 1 734 346
- EP-B1- 2 245 429
- DE-A1- 10 006 326

## Beschreibung

Die Erfindung betrifft ein Verteilerventil mit integrierter Durchflussmesseinrichtung zum Einsatz an einem Leitungsrohr, z.B. ein so genannter Verteilerbalken einer Verteilerstation, insbesondere für Warmwasser- und Heizungsanlagen.

Verteilerventile mit integrierter Durchflussmesseinrichtung zum Einsatz in einer Hauptleitung und/oder in so genannten Verteilerbalken einer Verteilerstation und/oder mehreren davon abzweigenden Anschlussleitungen für Warmwasserheizungen sind aus dem Stand der Technik bekannt und dienen zum Abgleich der einzelnen Leitungen zueinander, zur Verhinderung von Leistungsverlusten sowie zum hydraulischen Ausgleich in der Warmwasserheizungsanlage. Das Verteilerventil weist einen verschließbaren Ventilsitz und eine Anzeige auf. Die Anzeige, die sich längs einer Achse in ein radial in das Leitungsrohr ragendes Anschlussrohr des Verteilerventils erstreckt, besteht aus einem durch die Strömung im Anschlussrohr auslenkbaren Anströmteil, dessen jeweilige Stellung im Anschlussrohr zur Anzeige einer an der Durchflussmesseinrichtung von außen ablesbaren Durchflussmenge des Mediums durch das Anschlussrohr dient. Durch Drehung an einem Stellelement wird das Verschlussteil in Bezug auf den Ventilsitz bewegt und das Ventil geöffnet oder geschlossen, für die Einstellung der Durchflussmenge des Mediums durch eine im Anschlussrohr vorgesehene Austrittsöffnung. Ein derartiges Verteilventil ist aus der EP 1 734 346 A2 bekannt.

Aus der DE 100 06 326 A1 ist weiterhin ein Handantrieb für Absperrorgane bekannt, bei dem mittels einem Handrad unter Zwischenschaltung einer Spindel ein Ventilelement eines Ventils betätigt wird. Die Bewegung der Spindel ist für eine Schließbegrenzung mit einer ersten einstellbaren Endlage und für eine Hubbegrenzung mit einer zweiten einstellbaren Endlage begrenzbar. Hierzu sind im Handrad axial verstellbare Hülsen mit Anschlägen vorgesehen, die nach deren Einstellung durch eine Abdeckkappe abgedeckt werden, damit keine unbeabsichtigte Verstellung erfolgt. Für eine Neueinstellung der Begrenzung muss zunächst erst die Abdeckkappe entfernt werden.

Nachteilig bei diesen Verteilerventilen ist, dass für eine genaue Regulierung der benötigten Durchflussmenge, je nach Ausführung, mehr oder weniger Fingerspitzengefühl sowie Verantwortungsbewusstsein des Bedieners bei der Einstellung erforderlich sind.

Bei dem Handantrieb ist zwar eine Einstellung von Endlagen möglich, diese Einstellung ist jedoch für die vorgesehene Anwendung zu ungenau und die Einstellelemente für die Endlagen, die axial verstellbaren Hülsen, können sich bei der Betätigung des Handrades verstellen.

In der EP 2 245 429 B1 wird ein Verteilerventil mit einer Durchflussmesseinrichtung beschrieben, dem eine Voreinstelleinrichtung zugeordnet ist, die den Hub des Ventilkörpers begrenzt, indem dem Verschlussteil in Form eines Ventilkörpers und/oder dem führenden Begrenzungselement als Voreinstelleinrichtung ein Hubbegrenzer zugeordnet ist, der von einem axial bewegbaren Einstellglied und einem Sicherungselement gebildet ist.

Ausgehend von diesem Stand der Technik besteht die Aufgabe der Erfindung darin, ein Verteilerventil mit einer Durchflussmesseinrichtung derart zu verbessern, dass durch eine vereinfachte axiale Verstellung und Arretierung der Bauteile des Ventilkörpers bezüglich der Durchflussmenge eine bessere Bedienung des Verteilerventils verbunden mit einer genaueren Einstellung der Durchflussmenge erhalten wird; zudem sollen durch die neue Gestaltung des Verteilerventils seine Herstellungskosten und der Wartungsaufwand bei seinem bestimmungsgemäßen Einsatz gesenkt werden.

Gelöst wird diese Aufgabe mit einem Verteilerventil mit integrierter Durchflussmesseinrichtung mit den Merkmalen des Anspruches 1. Die nachgeordneten Ansprüche 2 bis 8 offenbaren weitere Ausgestaltungsvarianten der Erfindung.

Das erfindungsgemäße Verteilerventil mit einer integrierten Durchflussmesseinrichtung zeichnet sich dadurch aus, dass die Einstellung des Durchflusses durch Drehung eines Schauglases und gleichzeitiger Verstellung eines an einem unteren Ende des Schauglases angeordneten Reguliereinsatzes bezüglich einem Ventilsitz des Verteilerventiles vorgesehen ist, wobei unterschiedliche Verstellwege des Reguliereinsatzes durch einen verstellbaren Anschlag vorgesehen sind, der in der Höhe verstellbar und jeweils in einer vorgegebenen Stellung gesichert gehalten ist und dadurch - mehrfach reproduzierbar - den Verstellweg des Reguliereinsatzes und somit den Durchfluss begrenzt. Hierzu ist nach der Erfindung am Verteilerventil vorgesehen, dass das Schauglas in seinem mittleren Bereich ein Außengewinde aufweist, welches in ein Innengewinde eines Gehäuseteils des Verteilerventils eingreift, und bei dem der Anschlag ein Einstellelement ist. Weiterhin ist vorgesehen, dass mittels des Einstellelementes die Stellbewegung des Schauglases und des Reguliereinsatzes begrenzbar ist, indem ein Gewindeansatz des Außengewindes des Schauglases an einer Wandung des Einstellelementes anschlägt, vorzugweise innen an der Wandung.

Eine bevorzugte Ausführungsform des Einstellelementes wird darin gesehen, dass das Einstellelement als Zylinderkörper mit einem Innengewinde ausgebildet ist, wobei das Einstellelement durch eine axiale Drehung auf einem Außengewinde eines Gehäuseteils, in welchem auch das Schauglas geführt und axial bewegbar ist, höhenverstellbar vorgesehen ist. Der Zylinderkörper ist im Wesentlichen und vorzugsweise deckeiförmig mit einem zentrischen Durchbruch, durch den das Schauglas hindurch geführt ist.

Eine bevorzugte Weiterbildung der Erfindung wird darin gesehen, dass die Lagesicherung des Einstellelementes durch eine Arretierkappe vorgesehen ist, wobei die Arretierkappe mittels einer Einspreizverbindung auf dem Gehäuseteil in Arretierstellung durch Formschluss gehalten ist.

Bevorzugt ist ferner vorgesehen, dass die Arretierkappe einen Bereich mit Schlitzen aufweist, wobei die Arretierkappe in Arretierstellung mit einer Abschlusskante auf einer äußeren Kante des Verteilerrohres oder an einer außen am Gehäuseteil angeordneten Formstruktur aufliegt. In einer vorteilhaften Ausführungsvariante sind die Schlitze im unteren Randbereich der Arretierkappe angeordnet. Nach einer anderen vorteilhaften Ausführungsvariante sind die Schlitze im oberen Bereich der Mantelfläche der Arretierkappe angeordnet. Der Innenbereich der Arretierkappe und die Außenfläche des Einstellelementes haben Formstrukturen, die bei aufgesetzter Arretierkappe zusammenwirken und somit eine unbeabsichtigte Verstellung der eingestellten Position des Einstellelementes verhindern.

Wesentlich an dem Verteilerventil mit integrierter Durchflussmesseinrichtung ist ein neuartiger verstellbarer Anschlag in Form eines Einstellelementes in Verbindung mit einer Arretierkappe zur Einstellung des Durchflusses. Für die Einstellung des Durchflusses durch Verstellung eines am Ende des Schauglases angeordneten Reguliereinsatzes können mit dem erfindungsgemäßen Einstellelement unterschiedliche Verstellwege erzeugt und mittels einer Arretierkappe das Einstellelement lagegesichert erhalten werden und dadurch sowohl eine vereinfachte axiale Verstellung und Arretierung der Bauteile des Ventilkörpers bezüglich einer Durchflussmenge, als auch eine bessere Bedienung des Verteilerventils verbunden mit einer genaueren Einstellung der Durchflussmenge erzielt werden.

Weitere Einzelheiten, Merkmale und Vorteile der Erfindung werden in dem folgenden Beschreibungsteil genannt und näher erläutert und sind zudem in Verbindung mit der Beschreibung und dem in Zeichnungen schematisiert dargestellten Ausführungsbeispiel der Erfindung offenbart.

Es zeigen:
- Fig. 1: ein Verteilerventil mit integrierter Durchflussmesseinrichtung in einer Schnittdarstellung, eingebaut in ein Leitungsrohr;
- Fig. 2: die Durchflussmesseinrichtung mit Stelleinrichtung des Verteilerventils nach Figur 1 in einer Schnittdarstellung;
- Fig. 3: das Verteilerventil nach Figur 1 mit teilweise geöffnetem Ventil und
- Fig. 4: das Verteilerventil nach Figur 1 mit vollständig geöffneten Ventil.

Die in den Figuren angezogenen Bezugsziffern haben jeweils die gleiche Bedeutung, auch wenn sie in der Beschreibung der Ausführungen nicht zu jeder Figur ausdrücklich genannt werden. Begriffe wie "links", "rechts", "oben" oder "unten" sind jeweils und lediglich bezüglich der Darstellung in den Figuren genannt; in der tatsächlichen Anordnung in der Praxis können sich andere Positionen ergeben. Weiterhin wird darauf hingewiesen, dass die Figuren keine technischen Zeichnungen sind, weshalb teilweise Schraffuren und Abbruchlinien fehlen. Auch können die relativen Dimensionen von der Wirklichkeit abweichen.

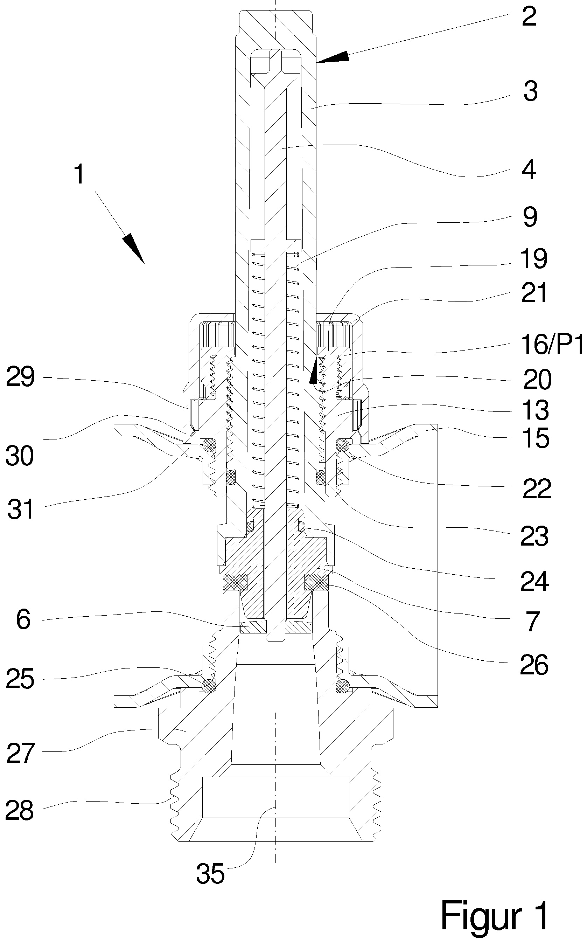

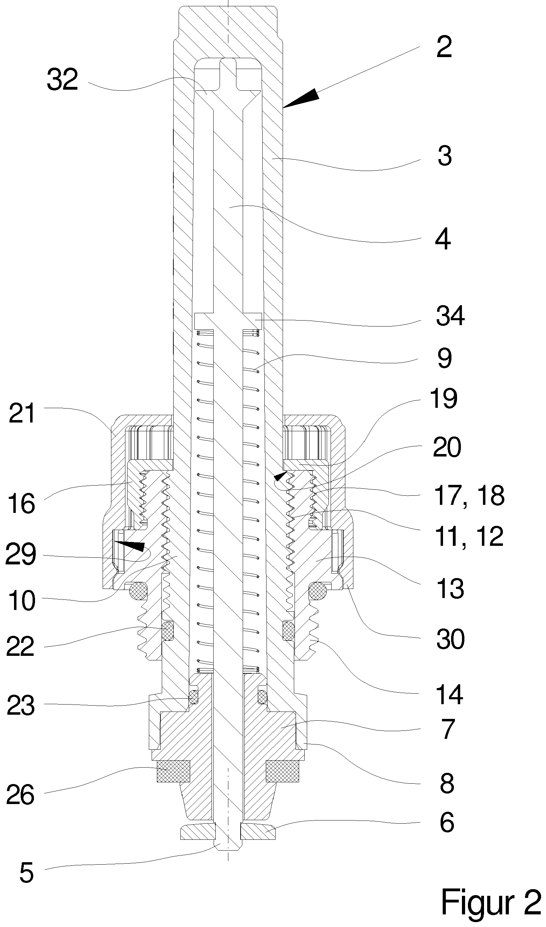

Das in den Figuren 1 bis 4 dargestellte Verteilerventil 1 mit einer integrierten Durchflussmesseinrichtung 2 wird, bei diesem Ausführungsbeispiel, mit seinem Ventileinsatz im Vorlauf eines Warmwasser-Heizungssystems in eine Öffnung eines nicht näher dargestellten bekannten Hauptrohres 15 (Leitungsrohr) konzentrisch zu einer radial angeordneten Funktionsachse 35 eingesetzt und wird dort abdichtend mittels eines Gewindes 14 gehalten. Gegenüberliegend von diesem Ventileinsatz des Verteilerventiles 1 ist in einer weiteren Öffnung des Hauptrohres 15 ein Anschlusselement 27 ebenfalls konzentrisch zu der Funktionsachse 35 angeordnet. Dieses Anschlusselement 27 ist hier mittels eines Gewinde eingeschraubt. An dem außen liegenden freien Ende des Anschlusselements 27 ist außen ein Gewinde 28, an welchem eine weiterführende Leitung anschraubbar ist. An dem in das Hauptrohr 15 ragenden Ende des Anschlusselemente 27 ist der Ventilsitz des Verteilerventiles 1 so angeordnet, dass er mit einem Reguliereinsatz 7 des Verteilerventils 1 zusammenwirken kann.

In dem Verteilerventil 1 ist die integrierte Durchflussmesseinrichtung 2, die sich längs einer Funktionsachse 35 bis in ein Anschlussrohr 27 des Verteilerventils 1 erstreckt, angeordnet.

Diese Durchflussmesseinrichtung 2 weist eine neue, erfindungsgemäße Einstellung des Durchflusses auf und besteht zunächst aus einem bekannten in einem Gehäuse/Gehäuseteil 13 axial zur Funktionsachse 35 bewegbar angeordneten Schauglas 3 mit einer nicht näher dargestellten bekannten Skala, in der ein Stößel 4 geführt ist, an dessen unterem Ende 5 ein Anzeigeteller/Anströmteil 6 und an dessen oberen Endbereich eine Ringnase 32 angeordnet ist.

Der Stößel 4 wird gleichzeitig in dem Reguliereinsatz 7 geführt, der an einem unteren Ende 8 des Schauglases 3 angeordnet ist. Mit einer Feder 9, die sich am Reguliereinsatz 7 und axial gegenüberliegend an einem Bund 34 abstützt, wird der Stößel 4 nach oben gedrückt.

Das Schauglas 3 weist in einem mittleren Bereich 10 ein Außengewinde 11 auf, das in ein Innengewinde 12 des Gehäuseteiles 13 des Verteilerventils 1 eingreift.

Das Gehäuseteil 13 ist mittels eines Gewindes 14 in dem Verteilerrohr/Hauptrohr 15 befestigt, und somit der Ventileinsatz des Verteilerventils 1. Das Gehäuseteil 13 ist dazu als ein Zylinderkörper mit einem Bund ausgebildet.

Der Zylinderkörper des Gehäuseteils 13 besitzt zudem eine konzentrisch zu seiner Längsachse angeordnete Innenbohrung. Der obere Abschnitt der Innenbohrung, also der vom Hauptrohr 15 wegzeigende Abschnitt, ist ein Innengewinde 12. Der untere Abschnitt der Innenbohrung, also der zum Hauptrohr 15 hinzeigende und teils in selbiges hineinreichende Abschnitt, ist für den unteren Bereich des Schauglases 3 eine Führung.

Oberhalb des etwa mittig angeordneten Bundes hat das Gehäuseteil 13 ein Außengewinde 18.

Die Einstellung der Durchflussmenge pro Zeiteinheit erfolgt durch Drehen des Schauglases 3 und gleichzeitiger Verstellung des am unteren Ende 8 des Schauglases 3 angeordneten Reguliereinsatzes 7 in Bezug auf den Ventilsitz.

Um unterschiedliche Verstellwege des Reguliereinsatzes 7 jeweils reproduzierbar realisieren zu können, ist erfindungsgemäß ein neuartiger verstellbarer Anschlag mittels eines Einstellelementes 16 vorgesehen. Das Einstellelement 16 ist als Zylinderkörper mit einem Innengewinde 17 ausgebildet und oberhalb des am Gehäuseteil 13 vorgesehenen Bund konzentrisch zum Gehäuseteil 13 angeordnet. Durch Drehung ist das Einstellelement 16 axial auf dem Außengewinde 18 des Gehäuseteiles 13 höhenverstellbar.

Das Einstellelement 16 ist vorteilhaft so ausgebildet, dass mittels des Einstellelementes 16 die Stellbewegung des Schauglases 3 und des Reguliereinsatzes 7 begrenzbar ist, indem ein Gewindeansatz 20 des Außengewindes 11 des Schauglases 3 an einer horizontal, also quer zur Funktionsachse 35 angeordnete Wandung 19 des Einstellelementes 16 anschlägt.

Durch die Höhenverstellung des Einstellelementes 16 kann somit die Stellbewegung des Schauglases 3 und damit des Reguliereinsatzes 7 begrenzt werden. Die Lagesicherung des Einstellelementes 16 erfolgt durch eine Arretierkappe 21, die vorzugsweise mittels einer Einspreizverbindung auf das Gehäuseteil 13 in Arretierstellung durch Formschluss gehalten ist.

Die Arretierkappe 21 ist dazu vorteilhaft und zum Beispiel so ausgebildet, dass sie einen Bereich aufweist, der für eine bessere Einspreizverbindung mit Schlitzen ausgebildet ist. Bei dem in den Figuren gezeigten Ausführungsbeispiel ist es vorzugsweise der unteren Randbereich 29.

Die Arretierkappe 21 liegt in Arretierstellung mit ihrer Abschlusskante 30 auf einer äußeren Kante 31 eines Verteilerrohres 13 auf.

Um den Verstellvorgang vorzunehmen, wird zunächst die Arretierkappe 21 entfernt und dann das Einstellelement 16, welches in der Figur 1 die Position P1 hat, durch Drehen entgegen dem Uhrzeigersinn angehoben.

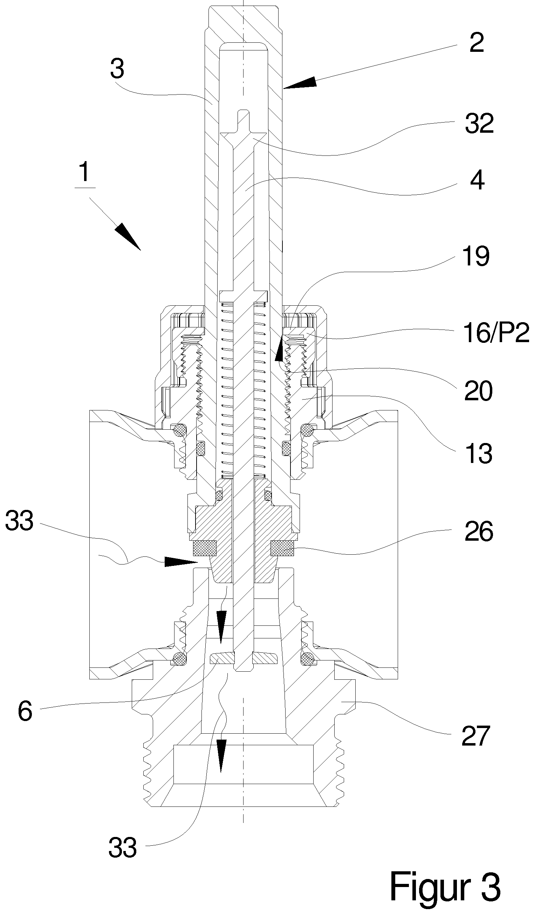

Der Durchfluss, genauer gesagt die Durchflussmenge pro Zeiteinheit, wird nun durch Drehen des Schauglases 3 auf den gewünschten Wert eingestellt und dann das Einstellelement 16 durch Drehen im Uhrzeigersinn nach unten bewegt, bis die Innenfläche der Wandung 19 des Einstellelementes 16 an dem Gewindeansatz 20 des Außengewindes 11 des Schauglases 3 anschlägt. Dieser Zustand des Verteilerventiles 1 ist in der Figur 3 gezeigt. Das Einstellelement 16 hat nunmehr die Position P2. Die Pfeile 33 symbolisieren das Fließen des Mediums

Durch das Aufsetzen der Arretierkappe 21 auf das Gehäuseteil 13 wird die Lage des Einstellelementes 16 gesichert. Ergänzend und vorteilhaft weisen hierzu zudem die Innenfläche der Arretierkappe 21 und die dieser Innenfläche gegenüberliegende äußere Umfangsfläche des Einstellelementes 16 achsparallel ausgerichtete Stege und korrespondierende nutförmige Vertiefungen auf, welche bei aufgesteckter Arretierkappe 21 zusammenwirken und ein Drehen des Einstellelementes 16 verhindern.

Durch Drehen des Schauglases 3 kann dann das Verteilerventil 1 - immer wieder reproduzierbar - in dem vorgesehenen Bereich (Verstellweg), also zwischen der Position P1 und der Position P2 geöffnet oder geschlossen werden. Diese Position P2 in der Fig. 3 entspricht einer teilweisen Öffnung des Verteilerventils.

Somit ist nach der Erfindung in die Reguliereinrichtung des Verteilerventiles 1 eine Memory-Funktion integriert, welche zudem sehr variabel einstellbar ist.

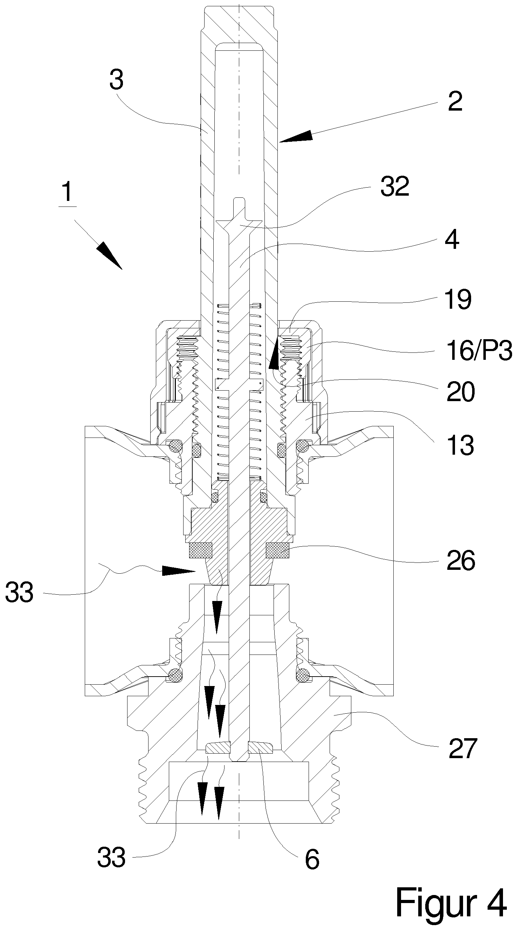

In der Figur 4 ist das Verteilerventil 1 in einem solchen Regelzustand gezeigt, bei dem das Verteilerventil 1 zwischen einer Position P1 und einer Position P3 geöffnet und geschlossen werden kann. Das heißt, das Einstellelement 16 nimmt die Position P3 ein und ist in dieser Position mittels der Arretierkappe 21 festgelegt, bis die Lage des Einstellelementes 16 in der bereits weiter vorn beschriebenen Art und Weise neu eingestellt wird.

Zur Abdichtung der Bauteile und Baugruppen des Verteilerventils 1 gegenüber dem Hauptrohr 15 einschließlich gegenüber dem regulierten Medium werden in dem Verteilerventil 1 O-Ringe 22, 23, 24, 25 und eine Flachdichtung 26 eingesetzt.

Die Erfindung beschränkt sich nicht auf das gezeigte Ausführungsbeispiel, sondern ist in ihrem Aufbau variabel. Sie umfasst insbesondere auch Varianten, die durch Kombination von in Verbindung mit der vorliegenden Erfindung beschriebenen Merkmale bzw. Elementen gebildet werden können.

Alle in der vorstehenden Beschreibung erwähnten sowie aus der Zeichnungen entnehmbaren Merkmale sind weitere Bestandteile der Erfindung, auch wenn sie nicht besonders hervorgehoben und in den Ansprüchen erwähnt sind.

So kann beispielsweise die Lage der Schlitze in der Arretierkappe 21 im Bereich ihres unteren Randes 29 liegen oder in einem weiter oben liegenden Bereich ihrer ringförmigen Wand. Auch können die durch die Schlitze gebildeten federnden Abschnitte ihrer Wand nach innen gerichtete Rastelemente aufweisen, welche mit entsprechenden Konturen der Außenfläche des Einstellelementes 16 zusammenwirken, welche eine andere Form haben als die bereits weiter vorn erwähnten Stege und nutenförmigen Vertiefungen.

Weiterhin kann das untere Ende des Schauglases, bei bestimmungsgemäßer Befestigung des Verteilerventils am Verteilerrohr, innerhalb des Verteilerrohres (15) sein; vorzugweise kann das untere Ende des Schauglases unterhalb des Gehäuseteils sein.

### Bezugszeichenliste

- 1: Verteilerventil
- 2: Durchflussmesseinrichtung
- 3: Schauglas (Funktionsröhre)
- 4: Stößel
- 5: unteres Ende des Stößels
- 6: Anströmteil (Anzeigeteller)
- 7: Reguliereinsatz
- 8: unteres Ende des Schauglases 3
- 9: Feder
- 10: mittlerer Bereich des Schauglases
- 11: Außengewinde des Schauglases 3
- 12: Innengewinde des Gehäuseteils 13
- 13: Gehäuseteil
- 14: Befestigungsgewinde des Gehäuseteils 13
- 15: Verteilerrohr (Hauptrohr oder Abzweigrohr)
- 16: Einstellelement
- 17: Innengewinde des Einstellelementes 16
- 18: Außengewinde des Gehäuseteils 13
- 19: Wandung des Einstellelementes 16
- 20: Gewindeansatz des Außengewindes 11 des Schauglases
- 21: Arretierkappe
- 22: O-Ring
- 23: O-Ring
- 24: O-Ring
- 25: O-Ring
- 26: Flachdichtung
- 27: Anschlusselement (Abzweigstutzen)
- 28: Gewinde des Anschlusselementes 27
- 29: geschlitzter unterer Randbereich der Arretierkappe 21
- 30: Abschlusskante der Arretierkappe 21
- 31: äußere Kante des Verteilerrohres 1
- 32: Ringnase (an Pos. 4)
- 33: Pfeil (fließendes Fluid/Medium/Wasser)
- 34: Bund (an Pos. 4, Widerlager für Pos. 9)
- 35: Funktionsachse (des Verteilerventils 1)

- P1: erste Position (Verteilerventil geschlossen)
- P2: zweite Position (Verteilerventil teilweise geöffnet)
- P3: dritte Position (Verteilerventil vollständig geöffnet)

## Patentansprüche

1. Verteilerventil (1) mit integrierter Durchflussmesseinrichtung, insbesondere für Warmwasser-Heizungsanlagen zum Einsatz an einem Verteilerrohr (15),
wobei die Durchflussmesseinrichtung ein Schauglas (3) mit einer Skala, einen Stößel (4), einen Reguliereinsatz (7), eine sich daran abstützende Feder (9) sowie eine Einrichtung zur Einstellung der Durchflussmenge umfasst, wobei die Einstellung des Durchflusses / der Durchflussmenge durch Drehung des Schauglases (3) und einer damit einhergehenden Verstellung des an einem unteren Ende (8) des Schauglases (3) angeordneten Reguliereinsatzes (7) vorgesehen ist, wobei unterschiedliche Verstellwege des Reguliereinsatzes (7) durch einen verstellbaren und zeitweilig festlegbaren Anschlag vorgesehen sind, der in der Höhe verstellbar und jeweils in einer vorgegebenen Stellung gesichert gehalten ist,
**bei dem**
das Schauglas (3) in seinem mittleren Bereich (10) ein Außengewinde (11) aufweist, welches in ein Innengewinde (12) eines Gehäuseteils (13) des Verteilerventils (1) eingreift, und bei dem der Anschlag ein Einstellelement (16) ist, wobei mittels des Einstellelementes (16) die Stellbewegung des Schauglases (3) und des Reguliereinsatzes (7) begrenzbar ist, indem ein Gewindeansatz (20) des Außengewindes (11) des Schauglases (3) an einer Wandung (19) des Einstellelementes (16) anschlägt.

2. Verteilerventil (1) nach Anspruch 1,
**dadurch gekennzeichnet, dass**
das Einstellelement (16) als Zylinderkörper mit einem Innengewinde (17) ausgebildet ist, wobei das Einstellelement (16) durch eine axiale Drehung auf einem Außengewinde (18) eines Gehäuseteils (13) höhenverstellbar vorgesehen ist.

3. Verteilventil (1) nach einem der Ansprüche 1 bis 2, **dadurch gekennzeichnet, dass**
die Lagesicherung des Einstellelementes (16) durch eine Arretierkappe (21) vorgesehen ist, wobei die Arretierkappe (21) vorzugsweise mittels einer Einspreizverbindung auf dem Gehäuseteil (13) in Arretierstellung durch Formschluss gehalten ist.

4. Verteilventil (1) nach Anspruch 3,
**dadurch gekennzeichnet, dass**
dass die Arretierkappe (21) in wenigstens einem Teilbereich Schlitze aufweist, zur Bildung von federnden Wandabschnitten, wobei diese Wandabschnitte jeweils wenigstens ein Rastelement aufweisen, die mit korrespondierenden Elementen am Einstellelement (16) zwecks Herstellung einer Arretierstellung zusammenwirken.

5. Verteilventil (1) nach Anspruch 4,
**dadurch gekennzeichnet, dass**
dass die Arretierkappe (21) in einem unteren Randbereich (29) Schlitze aufweist, wobei die Arretierkappe (21) in Arretierstellung vorzugsweise mit einer Abschlusskante (30) an einer äußeren Kante (31) eines Verteilerrohres (15) anliegt oder aufliegt.

6. Verteilventil nach Anspruch 4,
**dadurch gekennzeichnet, dass**
dass die Arretierkappe (21) in ihrem oberen Wandbereich Schlitze aufweist.

7. Verteilventil (1) nach einem der Ansprüche 1 bis 6, **dadurch gekennzeichnet, dass**
das untere Ende (8) des Schauglases (3), bei bestimmungsgemäßer Befestigung des Verteilerventils (1) am Verteilerrohr (15), innerhalb des Verteilerrohres (15) ist.

8. Verteilventil (1) nach Anspruch 7,
**dadurch gekennzeichnet, dass**
das untere Ende (8) des Schauglases (3) unterhalb des Gehäuseteils (13) ist.

## Claims

1. Distributor valve (1) with integrated throughflow measuring device, particularly for hot water heating installations for use at a distributor pipe (15),
wherein the throughflow measuring device comprises a viewing glass (3) with a scale, a plunger (4), a regulating insert (7), a spring (9) supported thereat and a device for setting the throughflow quantity, wherein setting of the throughflow or throughflow quantity is provided by rotation of the viewing glass (3) and accompanying adjustment of the regulating insert (7) arranged at a lower end (8) of the viewing glass (3), wherein different adjustment travels of the regulating insert (7) are provided by an adjustable and temporarily fixable abutment which is adjustable in height and held secured each time in a predetermined setting,
in which
the viewing glass (3) has in the middle region (10) thereof an external thread (11) engaged in an internal thread (12) of a housing part (13) of the distributor valve (1) and in which the abutment is a setting element (16), wherein the setting movement of the viewing glass (3) and of the regulating insert (7) can be limited by means of the setting element (16) in that a thread start (20) of the external thread (11) of the viewing glass (3) bears against a wall (19) of the setting element (16).

2. Distributor valve (1) according to claim 1, **characterised in that** the setting element (16) is constructed as a cylinder body with an internal thread (17), wherein the setting element (16) is provided to be adjustable in height by axial rotation on an external thread (18) of a housing part (13).

3. Distributor valve (1) according to one of claims 1 and 2, **characterised in that** the positional securing of the setting element (16) is provided by a locking cap (21), wherein the locking cap (21) is retained by mechanically positive connection preferably by means of a spreading connection on the housing part (13) in locking setting.

4. Distributor valve (1) according to claim 3, **characterised in that** the locking cap (21) in at least a sub-region has slots for formation of resilient wall sections, wherein these wall sections each have at least one detent element which co-operates with corresponding elements at the setting element (16) for the purpose of producing a locking setting.

5. Distributor valve (1) according to claim 4, **characterised in that** the locking cap (21) has slots in a lower edge region (29), wherein the locking cap (21) in locking setting preferably bears or rests by a closure edge (30) against or on an outer edge (31) of a distributor pipe (15).

6. Distributor valve according to claim 4, **characterised in that** the locking cap (21) has slots in the upper wall region thereof.

7. Distributor valve (1) according to any one of claims 1 to 6, **characterised in that** the lower end (8) of the viewing glass (3) is within the distributor pipe (15) when the distributor valve (1) is secured to the distributor pipe (15) as intended.

8. Distributor valve (1) according to claim 7, **characterised in that** the lower end (8) of the viewing glass (3) is below the housing part (13).

## Revendications

1. Soupape de distribution (1) à dispositif intégré de mesure de débit, en particulier pour installations de chauffage par eau chaude, en vue de l'utilisation sur une tubulure de distribution (15),
ledit dispositif de mesure de débit comprenant une fenêtre d'observation (3) munie d'une échelle graduée, un coulisseau (4), une pièce régulatrice intégrée (7), un ressort (9) prenant appui sur cette dernière, ainsi qu'un dispositif dédié au réglage du débit, le réglage du flux en circulation/du débit étant prévu par rotation imprimée à la fenêtre d'observation (3), et par déplacement concomitant de la pièce régulatrice intégrée (7) située à une extrémité inférieure (8) de ladite fenêtre d'observation (3), différentes courses de déplacement de ladite pièce régulatrice intégrée (7) étant prévues sous l'action d'une butée réglable et temporairement blocable, qui peut être réglée en hauteur et est maintenue arrêtée dans une position respectivement préétablie,
soupape dans laquelle
la fenêtre d'observation (3) est pourvue, dans sa région centrale (10), d'un filetage extérieur (11) pénétrant dans un filetage intérieur (12) d'une partie de carter (13) de ladite soupape de distribution (1) ; et dans laquelle la butée est un élément de réglage (16), le mouvement de réglage de ladite fenêtre d'observation (3) et de la pièce régulatrice intégrée (7) pouvant être limité au moyen dudit élément de réglage (16), par venue en butée d'un appendice fileté (20) du filetage extérieur (11) de ladite fenêtre d'observation (3) contre une paroi (19) dudit élément de réglage (16).

2. Soupape de distribution (1) selon la revendication 1, **caractérisée par le fait que**
l'élément de réglage (16) est réalisé sous la forme d'un corps cylindrique à filetage intérieur (17), ledit élément de réglage (16) étant prévu avec faculté de réglage en hauteur, par rotation axiale sur un filetage extérieur (18) d'une partie de carter (13).

3. Soupape de distribution (1) selon l'une des revendications 1 à 2,
**caractérisée par le fait que**
le blocage à demeure de l'élément de réglage (16) est prévu par l'intermédiaire d'un capuchon d'arrêt (21), ledit capuchon d'arrêt (21) étant maintenu en position arrêtée sur la partie de carter (13), par complémentarité de formes, de préférence au moyen d'une liaison instaurée par écartement.

4. Soupape de distribution (1) selon la revendication 3, **caractérisée par le fait que**
le capuchon d'arrêt (21) est muni, dans au moins une région partielle, de fentes visant à former des zones de paroi élastiques, ces zones de paroi étant respectivement dotées d'au moins un élément d'encliquetage coopérant avec des éléments complémentaires, sur l'élément de réglage (16), afin d'établir une position arrêtée.

5. Soupape de distribution (1) selon la revendication 4, **caractérisée par le fait que**
le capuchon d'arrêt (21) comporte des fentes dans une région marginale inférieure (29), sachant que ledit capuchon d'arrêt (21) est en applique ou repose sur une arête extérieure (31) d'une tubulure de distribution (15), en position arrêtée, de préférence par une arête d'extrémité (30).

6. Soupape de distribution (1) selon la revendication 4, **caractérisée par le fait que**
le capuchon d'arrêt (21) comporte des fentes dans la région supérieure de sa paroi.

7. Soupape de distribution (1) selon l'une des revendications 1 à 6,
**caractérisée par le fait que**
l'extrémité inférieure (8) de la fenêtre d'observation (3) se trouve à l'intérieur de la tubulure de distribution (15) lorsque ladite soupape de distribution (1) est fixée à ladite tubulure de distribution (15) conformément à sa destination.

8. Soupape de distribution (1) selon la revendication 7, **caractérisée par le fait que**
l'extrémité inférieure (8) de la fenêtre d'observation (3) est située au-dessous de la partie de carter (13).
